# EUROPEAN PATENT APPLICATION

(11) **EP 4 104 688 A1**
(43) Date of publication of application: **21.12.2022**
(21) Application number: 20713348.9
(22) Date of filing: 10.02.2020
(51) Int. Cl.: A23N 15/02

(54) **STRAWBERRY CUTTING MACHINE**

(71) Applicant: Seditec S.A., 41110 Bollullos de la Mitación (ES)
(72) Inventor: CASTILLEJO MOYANO, José, 41110 BOLLULLOS DE LA MITACION (SEVILLA) (ES); CASTILLEJO FERNÁNDEZ, Gabriel, 41110 BOLLULLOS DE LA MITACION (SEVILLA) (ES)
(74) Representative: Pons
(86) International application number: PCT/ES2020/070089
(87) International publication number: WO 2021/160900

(57) **Abstract**

The present invention relates to a strawberry cutting machine that can cut off the calyces of strawberries for subsequent use of the remaining fruit, either for the preparation of jam, compote or for consumption, wherein said machine enables the cutting of the calyces of strawberries to be perpendicular to the longitudinal axis thereof and automatically regardless of the size of the strawberry.

## Description

### OBJECT OF THE INVENTION

The present invention relates to a strawberry cutting machine that in addition to cutting the calyx of said strawberry, enables the strawberry to be cut in half during the same operation for subsequent use of the resulting halves, either for the preparation of jam, compote or for consumption thereof.

The object of the invention is a strawberry cutting machine that enables the cutting of the calyces of strawberries to be perpendicular to the longitudinal axis thereof and automatically regardless of the strawberry size, thereby increasing production yield of hulled strawberry by 20%, since the waste during the cutting of the calyx is reduced to 8% of the total of the strawberry, this percentage being half the waste in calyx with respect to previously known systems and to manual hulling.

### BACKGROUND OF THE INVENTION

Strawberry cutting machines are known in the state of the art that enable the cutting of the calyces of strawberries for subsequent use of the remaining fruit, either for the preparation of jam, compote or for consumption thereof.

Among the aforementioned, the European patent EP2923586B1 by this same applicant relating to a strawberry cutting machine comprising a receiving hopper for receiving whole strawberries, transversal cutting means that perform the cutting of the calyx of the strawberry in a calyx cutting position, a set of receiving cradles where each receiving cradle is configured to receive one strawberry and comprises:
- two positioning rollers, wherein at least one of the two positioning rollers is rotatable around the axis thereof to position the strawberry in a position prior to the calyx cutting position or in a calyx cutting position, and
- at least one folding paddle that fixes the position of the strawberry within the receiving cradle in the position prior to the calyx cutting position or in the calyx cutting position.

The previous strawberry cutting machine further comprises displacement means that make it possible to move the strawberries within the movable receiving cradles from the position prior to the calyx cutting position to the calyx cutting position. These displacement means comprise movable pushers in the longitudinal direction of the strawberry which in turn comprise a needle that enables the strawberry to be punctured upon the advance of the movable pusher preventing the transversal displacement thereof.

The cutting machine of the previous patent has maximum strawberry cutting speeds of the order of 3 strawberries/second, well below current requirements.

The machine of the present invention enables all previous drawbacks to be solved with the possibility of increasing the strawberry cutting speed to more than double the strawberry cutting speed of the machine of the EP2923586B1 patent, besides reducing waste during the calyx cutting.

### DESCRIPTION OF THE INVENTION

The present invention relates to a strawberry cutting machine that in addition to cutting the calyx of said strawberry, enables the strawberry to be cut in half during the same operation for the subsequent use of the resulting halves, either for the preparation of jam, compote or for consumption thereof, regardless of strawberry size and speed of movement of the strawberries in the machine.

The machine can comprise at least one receiving hopper for whole strawberries, wherein the strawberries are introduced in bulk, wherein the at least one receiving hopper comprises a dosing tray that enables the strawberries to be dosed one by one to a set of receiving cradles.

Each receiving cradle comprises two positioning rollers that collect a strawberry from each receiving hopper and wherein at least one of the two rollers is rotatable around its axis to position the strawberry in a position prior to the calyx cutting position or in a calyx cutting position, and at least one folding paddle that fixes the position of the strawberry within the receiving cradle into the position prior to the calyx cutting position or in the calyx cutting position.

The strawberry cutting machine further comprises advance means of the set of the receiving cradles that carry out the advance of the receiving cradles.

The positioning rollers comprise a generatrix comprising a concave zone. This concave zone enables the central portion of the strawberry to be arranged on said zone during the rotation of at least one of the positioning rollers.

The strawberry cutting machine further comprises displacement means that make it possible to move the strawberries within the receiving cradles from the position prior to the calyx cutting position to the calyx cutting position.

The strawberry cutting machine further comprises clamping means configured to hold at least one portion of the strawberry in at least the calyx cutting position.
The displacement means and the clamping means are independently movable.

Preferably, the clamping means are configured to hold at least one portion of the strawberry both in the position prior to the calyx cutting position and in the calyx cutting position.

Preferably, the displacement means and the clamping means are independently movable essentially in the same direction of movement.

Preferably, the displacement means and the clamping means are independently movable essentially in the same direction of movement and are offset, such that the clamping of at least one portion of a strawberry by the clamping means begins before the movement of the strawberry within the receiving cradles, from the position prior to the calyx cutting position to the calyx cutting position, by the displacement means.

Also preferably, the removal of the clamping means begins before the removal of the displacement means.

Preferably, the machine comprises at least one first follower attached to the displacement means and at least one second follower attached to the clamping means, wherein the at least one first follower follows the trajectory defined by at least one first cam and the at least one second follower follows the trajectory defined by at least one second cam.

The strawberry cutting machine further comprises transversal cutting means that carry out the cutting of the strawberry calyx in a calyx cutting position and/or collecting means for collecting the strawberries with the calyx already cut.

The strawberry cutting machine thus constituted enables the displacement means and the clamping means to collaborate to ensure that the transversal cutting means carry out the cutting of the strawberry calyx correctly, that is, in a direction perpendicular to the longitudinal direction of the strawberry, and with a maximum use since the production yield of hulled strawberry is increased by 20%, given that the waste during the cutting of the calyx is reduced to 8% of the total of the strawberry, this percentage being half the waste in calyx with respect to previously known systems. Due to the fact that the displacement means and the clamping means are independently movable, preferably essentially in the same direction of movement, it is possible to carry out the clamping of the strawberry in the longitudinal direction thereof essentially along the entire dimension thereof defined as that which goes from the tip to the calyx (except the area of the calyx since the clamping means would come into contact with the transversal cutting means), regardless of the displacement of the strawberry carried out within the receiving cradle by means of the displacement means. This solves the problems associated with the machine of the patent EP2923586B1, which is included here as reference, where the displacement means and the clamping means are integrated, such that it is not possible to carry out the clamping of the strawberry in the longitudinal direction thereof essentially along the entire dimension thereof defined as that which goes from the tip to the calyx without having to depend on the strawberry size, in addition to the fact that the clamping was not carried out in an essentially longitudinal direction because the strawberry turned around, so that the cut of the calyx was not an essentially transversal cut, wasting a lot of strawberry.

Optionally, the clamping means further comprise longitudinal cutting means that enable the cutting of the strawberry in two halves to be carried out along a longitudinal plane thereof.

Furthermore, in the patent EP2923586B1, in order to increase the strawberry cutting speed, which is of the order of 3 strawberries/second, it is necessary to increase the displacement speed of the receiving cradles. However, this increase in the speed of the receiving cradles by increasing the speed of the advancement means would result in the strawberry not being correctly positioned on the positioning rollers of the receiving cradles, such that the cutting of the calyx may not be transversal, wasting a portion of the edible part of the strawberry and leaving part of the calyx uncut, which would decrease the quality of the jam or compote if this was the ultimate purpose of the strawberry.

To solve this drawback, the machine of the present invention further comprises movable drive means that are configured to come into contact with the positioning rollers such that the rotation speed of the positioning rollers is independent from the speed of the advance means of the set of receiving cradles.

In this way, in addition to making the rotation speed of the positioning rollers independent from the speed of the set of cradles, different rotation speeds of the positioning rollers can be achieved depending on the size of the strawberry to be cut, since for smaller strawberries the rotation speed of the positioning rollers must be lower than for larger strawberries, where the required rotation speed of the positioning rollers is greater.

For this, the machine comprises speed adjusting means for adjusting the speed of the movable drive means, which vary the speed of said movable drive means and consequently the rotation speed of the positioning rollers for the strawberry size to be cut.

In summary, the invention relates to a strawberry cutting machine comprising:
- transversal cutting means that carry out the cutting of the calyx of the strawberry in a calyx cutting position,
- a set of receiving cradles,
- advance means of the set of receiving cradles that carry out the advance of the receiving cradles,
   wherein each receiving cradle is configured to receive a strawberry and comprises:
   ∘ two positioning rollers, wherein at least one of the two positioning rollers is rotatable around its axis to position the strawberry in a position prior to the calyx cutting position or in a calyx cutting position, and
   ∘ at least one folding paddle that fixes the position of the strawberry within the receiving cradle into the position prior to the calyx cutting position or in the calyx cutting position,
- displacement means that make it possible to move the strawberries within the movable receiving cradles from the position prior to the calyx cutting position to the calyx cutting position; and
- clamping means configured to hold at least one portion of the strawberry in at least the calyx cutting position,
wherein the displacement means and the clamping means are independently movable.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, represent the following:

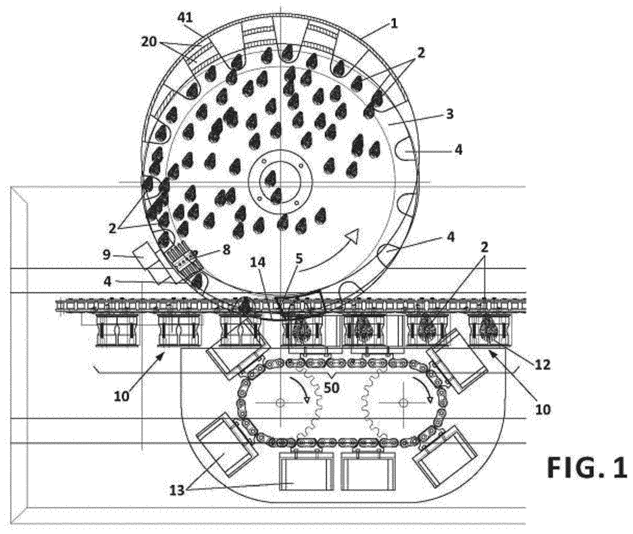

Figure 1 shows a plan view of the strawberry receiving hopper, the first set of receiving cradles and the movable hoppers of the strawberry cutting machine of the present invention.

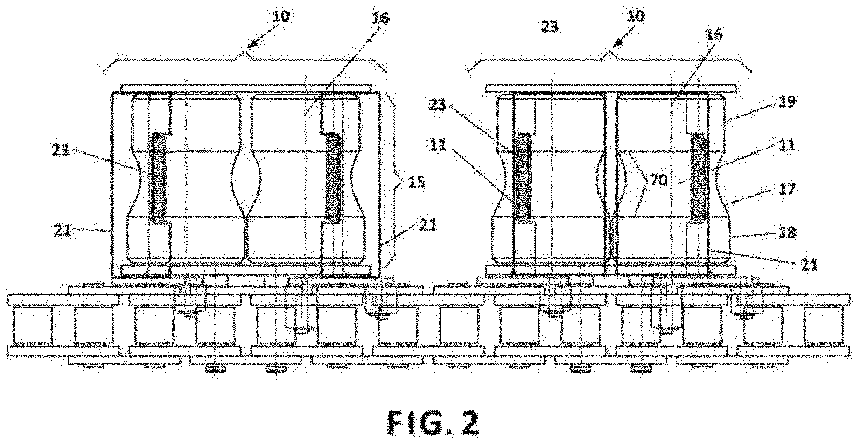

Figure 2 shows a plan view of a receiving cradle of the strawberry cutting machine of the present invention with the folding paddles in the open position on the left and a receiving cradle with the folding paddles in the closed position on the right.

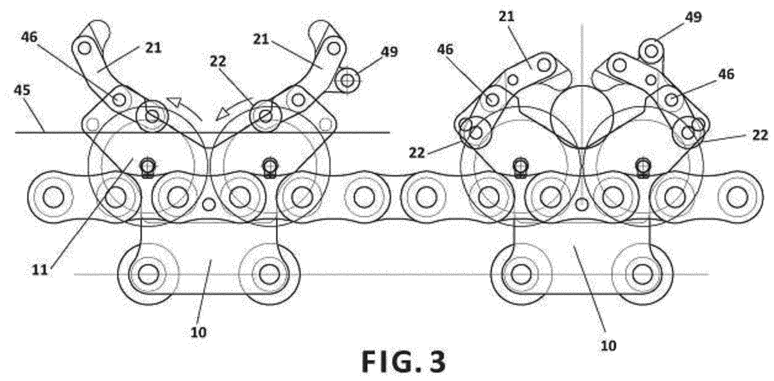

Figure 3 shows an elevation view of Figure 2.

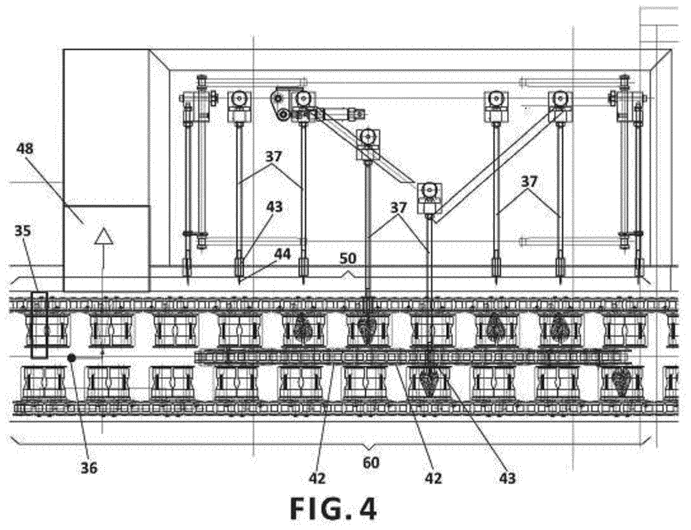

Figure 4 shows a plan view of the relocating means of the strawberries to move the strawberries out of the movable receiving cradles of the first set of cradles and deposit them in the cradles of the second set of cradles.
Figure 5 shows an elevation view of the displacement means that make it possible to move the strawberries within the movable receiving cradles from the position prior to the calyx cutting position to the calyx cutting position, of the clamping means configured to hold at least one portion of the strawberry in at least the calyx cutting position and of the transversal cutting means according to a first exemplary embodiment.
Figure 6 shows an elevation view of the displacement means that make it possible to move the strawberries within the movable receiving cradles from the position prior to the calyx cutting position to the calyx cutting position, of the clamping means configured to hold at least one portion of the strawberry in at least the calyx cutting position and of the transversal cutting means according to a second exemplary embodiment.
Figure 7 shows a partially detailed elevation view of the displacement means that make it possible to move the strawberries within the receiving cradles from the position prior to the calyx cutting position to the calyx cutting position according to the first exemplary embodiment.
Figure 8 shows a partially detailed elevation view of the clamping means configured to hold at least one portion of the strawberry in at least the calyx cutting position according to the first exemplary embodiment.
Figure 9 shows a partially detailed elevation view of the displacement means that make it possible to move the strawberries within the receiving cradles from the position prior to the calyx cutting position to the calyx cutting position according to the second exemplary embodiment.
Figure 10 shows a partially detailed elevation view of the clamping means configured to hold at least one portion of the strawberry in at least the calyx cutting position according to the second exemplary embodiment.
Figure 11 shows a diagram of the synchronism carried out by the at least one first follower and the at least one second follower connected to the displacement means and the clamping means respectively.
Figure 12 shows an elevation view of the advance means of the set of receiving cradle that carry out the advance of the receiving cradles and of the movable drive means of the strawberry cutting machine of the present invention.

### PREFERRED EMBODIMENT OF THE INVENTION

According to a preferred embodiment of the invention, the strawberry cutting machine comprises two receiving hoppers (1) for receiving whole strawberries (2), wherein the strawberries (2) are introduced in bulk, wherein each receiving hopper (1) comprises a dosing tray (3) that enables the strawberries (2) to be dosed one by one to a first set (50) of movable receiving cradles (10).

Each receiving hopper (1) is rotatable, where the rotation axis is inclined with respect to the vertical, which enables the strawberries (2) to accumulate in the lowest zone of the receiving hopper (1).

The dosing tray (3) comprises cavities (4) where each of the strawberries (2) are housed, cavities (4) that make it possible to separate each of the strawberries (2) from the rest.

Each receiving hopper (1) further comprises transfer means (5) that enable each strawberry (2) to be moved from the cavity (4) of the dosing tray (3) to one of the movable receiving cradles (10) through an opening (14) present in the receiving hopper (1), where these transfer means (5) are adjacent to the opening present in the receiving hopper (1).

The dosing tray (3) further comprises circumferential grooves (20) that prevent the interference of said dosing tray (3), which is integrated with the receiving hopper (1), with the transfer means (5) that are fixed. The dosing tray (3) further comprises a disk (41) arranged in the lower portion thereof that prevents the friction of the strawberry (2) with the bottom of the receiving hopper (1) and consequently the damage thereof.

Each receiving hopper (1) further comprises blocking means (8) that remove the strawberries (2) from above the cavity (4) of the dosing tray that will be facing the transfer means (5). The blocking means (8) comprise a rotating brush that is actuated by means of an engine (9).

Each movable receiving cradle (10) comprises two positioning rollers (11) that collect a strawberry (2) from the receiving hopper (1) due to the movement of the strawberry (2) by means of the transfer means (5) and wherein the two positioning rollers (11) rotate around their axis in the same direction to position the strawberry (2) in a position prior to the calyx cutting position (12), which will be described further on.

The cutting machine further comprises movable hoppers (13) that are arranged on the positioning rollers (11) of the movable receiving cradles (10) when they are faced with the opening (14) of the corresponding receiving hopper (1). These movable hoppers (13) prevent the movement of the strawberry (2) outside the space arranged above the positioning rollers (11).

The positioning rollers (11) comprise a generatrix (15) that defines the surface thereof (11) when said generatrix (15) rotates around a longitudinal axis (16) of the positioning rollers (11), wherein the generatrix ( 15) comprises a concave zone (17). This concave zone (17) enables the central portion of the strawberry (2) to be arranged on said zone during the rotation of the positioning rollers (11). The generatrix (15) further comprises two straight zones, a first straight zone (18) with a larger radius and a second zone (19) with a smaller radius that are arranged on both sides of the concave zone (17). This first zone (18) and second zone (19) define contact edges (70) that prevent the movement of the strawberry (2) in the longitudinal direction of the positioning rollers (11) once the central zone of the strawberry (1) is arranged between the opposing concave areas (17) of both positioning rollers (11), defining a position prior to the calyx cutting position (12).

Each movable receiving cradle (10) further comprises two folding paddles (21) arranged on each of the positioning rollers (11) that fix the position of the strawberry (2) within the movable receiving cradle (10) in the position prior to the calyx cutting position (12). These folding paddles (21) comprise first sheaves (22) that define the open position of said folding paddle (21) due to the contact of the first sheaves (22) with a guiding surface (45) and springs (23) that carry out the elastic connection between the folding paddles (21) and the movable receiving cradles (10), wherein the spring (23) axis coincides with the rotation axis (46) of the folding paddles (21). This spring (23) enables the folding paddles (21) to come into contact with strawberries (2) of any diameter in the closed position of said folding paddles (21) without damaging the strawberry (2) itself. This closed position takes place when the first sheaves (22) of the folding paddle (21) cease being in contact with the guiding surface (45), such that by means of the spring recovery force (23) the paddles rotate and come into contact with the strawberry (2) by retaining it within the receiving cradle (10).

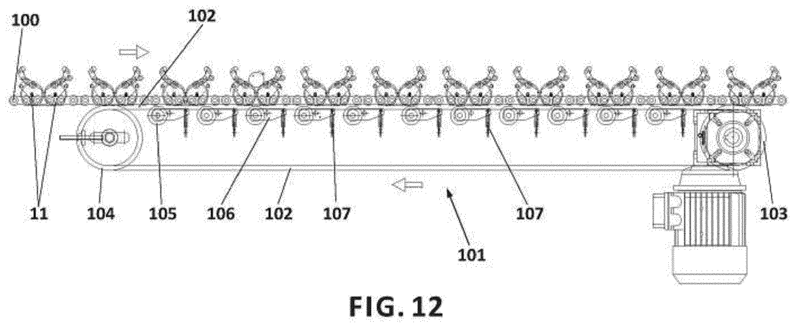

The strawberry cutting machine further comprises advance means (100) of the set of movable receiving cradles (10), shown in Figure 12, which carry out the advance of the movable receiving cradles (10) and movable drive means (101) that are configured to come into contact with the positioning rollers (11) such that the rotation speed of the positioning rollers (11) is independent from the speed of the advance means (100) of the movable receiving cradle set (10).

In this exemplary embodiment, the movable drive means (101) comprise movable drive belts (102) that come into contact with the positioning rollers (11). The movable drive belts (102) are arranged between two pulleys, a first drive pulley (103) that actuates and guides the drive belts (102) and a second redirection pulley (104) that guides the drive belts (102). The movable drive means (101) further comprise concave sheaves (105) which house and press the movable drive belts (102) against the positioning rollers (11) assuring contact between the movable drive belts (102) and the positioning rollers (11) in order to ensure that the rotation speed of the positioning rollers (11) is independent from the speed of the advance means (100) of the set of movable receiving cradles (10).

The machine comprises speed adjusting means for adjusting the speed of the movable drive means (101), which vary the speed of said movable drive means (101) depending on the size of the strawberry (2) to be cut. In this exemplary embodiment, the speed adjusting means comprise a rocker (106) attached to the concave sheave (105) and in turn attached to a spring (107) which in turn is attached to the machine frame, so that by adjusting the tension in the spring (107), the rotation of the rocker (106) on the concave sheave (105) varies, and consequently the pressure of the concave sheave (105) on the movable drive belts (102) which come into contact with the positioning rollers (11).

Once the transversal cutting of the strawberry (2), which will be described further on, is completed, the folding paddles (21) return to their open position due to the contact of second sheaves (49) present in the folding paddles (21) with projections (not shown) that return them to their open position, open position that is maintained by the contact of the first sheaves (22) with the guiding surface (45).

The strawberry cutting machine further comprises displacement means that make it possible to move the strawberries within the movable receiving cradles (10) from the position prior to the calyx (12) cutting position to the calyx (12) cutting position. These displacement means comprise pushers (25, 125) that are movable in the longitudinal direction of the strawberry (2)

The strawberry cutting machine further comprises clamping means configured to hold at least one portion of a strawberry (2) in at least the calyx (12) cutting position. These clamping means comprise at least one clamping needle (65, 165).

The displacement means and the clamping means are independently movable in the same direction of movement. Furthermore, the displacement means and the clamping means are independently movable essentially in the same direction of movement and are offset, such that the clamping of at least one portion of strawberry (2) by the clamping means begins before the movement of the strawberry (2) within the receiving cradles (10), from the position prior to the calyx (12) cutting position to the calyx (12) cutting position, by the displacement means and the removal of the clamping means begins before the removal of the displacement means.

The machine comprises at least one first follower (201) attached to the displacement means and at least one second follower (202) attached to the clamping means, wherein the at least one first follower (201) follows the trajectory defined by at least one first cam (203) and the at least one second follower (202) follows the trajectory defined by at least one second cam (204).

The at least one first follower (201) attached to the displacement means follows the trajectory defined by the at least one first cam (203) and the at least one second follower (202) attached to the clamping means follows the trajectory defined by the at least one second cam (204) because both the at least one first follower (201) and the at least one second follower (202) are integrally attached to a rotating tumbler (208) that forces the at least one first follower (201) and the at least one second follower (202) to follow the trajectory defined by the at least one first cam (203) and by the at least one second cam (204) respectively.

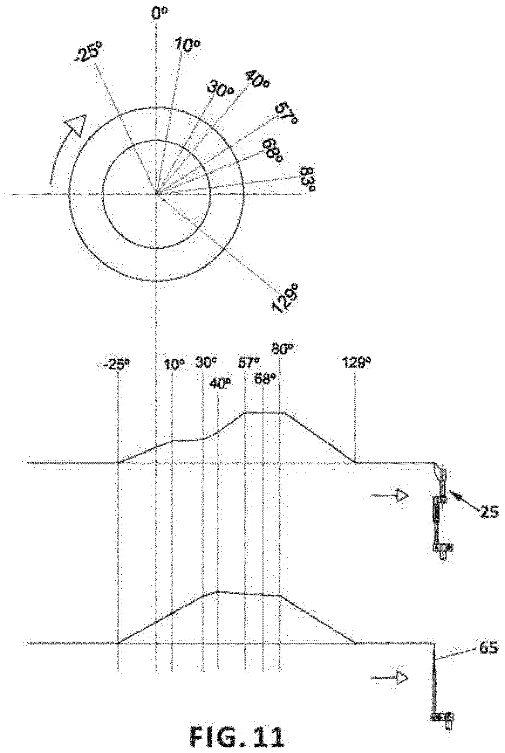

Figure 11 shows the synchronism carried out by the at least one first follower and the at least one second follower attached to the displacement means and the clamping means respectively for a non-limiting example.

In said figure 11, included here as reference, it is observed how the clamping of at least one portion of a strawberry (2) by the clamping means begins before the movement of the strawberry (2) within the receiving cradles (10), from the position prior to the calyx(12) cutting position to the calyx (12) cutting position, by the displacement means since the clamping means, specifically the needle (65), continues its advance up to a 40° angle of rotation of the rotating tumbler (208) while the displacement means, specifically the movable pusher (25) stop its advance at a 10° angle of rotation of the rotating tumbler (208) and continue advancing from a 30° angle to a 57° angle of rotation of the rotating tumbler (208), while the removal of the clamping means begins before the removal of the displacement means, since the clamping means, specifically the needle (65), start a slight recoil or removal up to an 80° angle of rotation of the rotating tumbler (208), to immediately afterwards start the recoil or removal of the displacement means, specifically the movable pusher (25). Both the displacement means and the clamping means complete their recoil or removal at approximately a rotation angle of the rotating tumbler of 129°. All this is due to the shape of the at least one first follower (201) that follows the trajectory defined by the at least one first cam (203) and the at least one second follower (202) that follows the trajectory defined by the at least one second cam (204). This movement is then repeated for each of the movable receiving cradles (10), and due to the presence of several sets of movable pushers (25, 125) and several needles (65) each of which have a first follower (201) and a second follower (202) respectively, which in turn follow the trajectory defined by a first cam (203) and a second cam (204) respectively.

The displacement means further comprise a movable head (26, 126) that pushes the strawberry (2) into the movable receiving cradle (10). This movable head (26, 126) has a shape that enables the insertion thereof into the inner space of the movable receiving cradle (10) for the movement of the strawberry (2) to the calyx (12) cutting position and the subsequent exit thereof when the folding paddles (21) are in their closed position. This movable head (26, 126) is elastically attached to the movable pusher (25, 125) by means of a spring (28, 128) to adapt the movable head (26, 126) to the strawberry (2) size. The movable pusher (25, 125) has a ball joint (87, 187) at the actuating end thereof that absorbs the misalignment thereof when the strawberry (2) is pushed.

The clamping means further comprise a support (66, 166) of the at least one clamping needle (65, 165).

Thus, due to the independence of movements, in this preferred embodiment, the at least one clamping needle (65, 165) is movable through at least one hole (55, 155) of the pushers (25, 125).

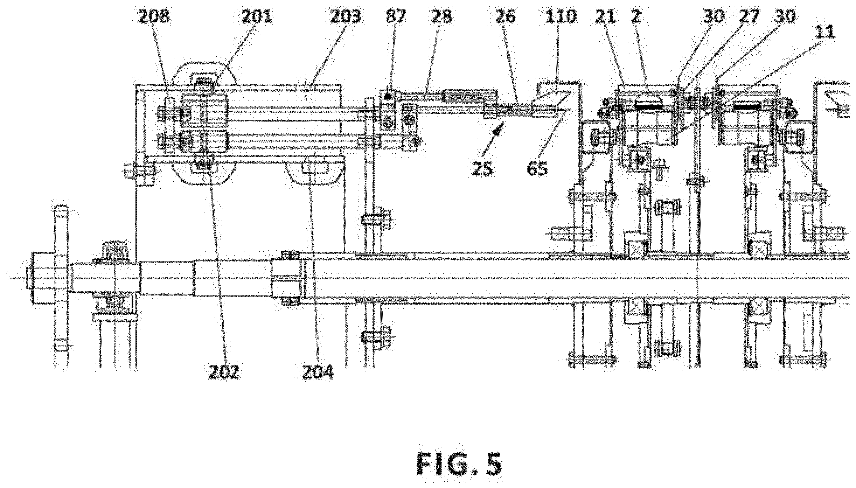

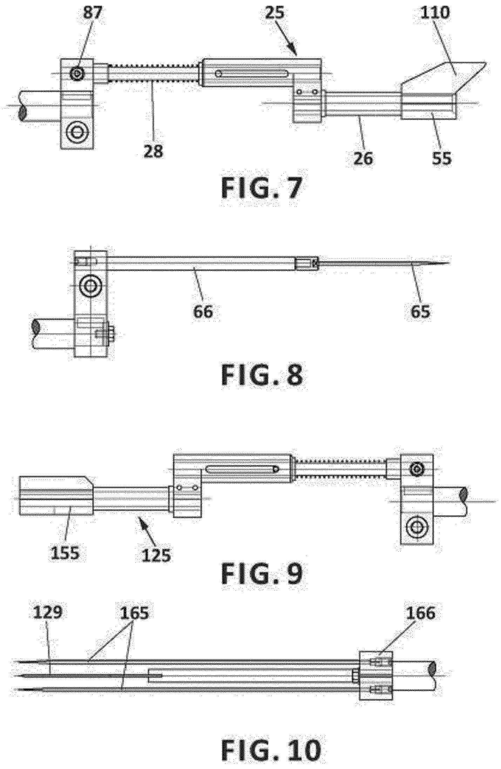

In a first preferred exemplary embodiment shown in Figures 5, 7 and 8, the displacement means and the clamping means are configured to arrange the strawberry in an ideal position to carry out the transversal cutting of the calyx (12), wherein the pusher (25) comprises centring means (110), and there is a single clamping needle (65) arranged in a centred position with respect to the clamping cradle (10).

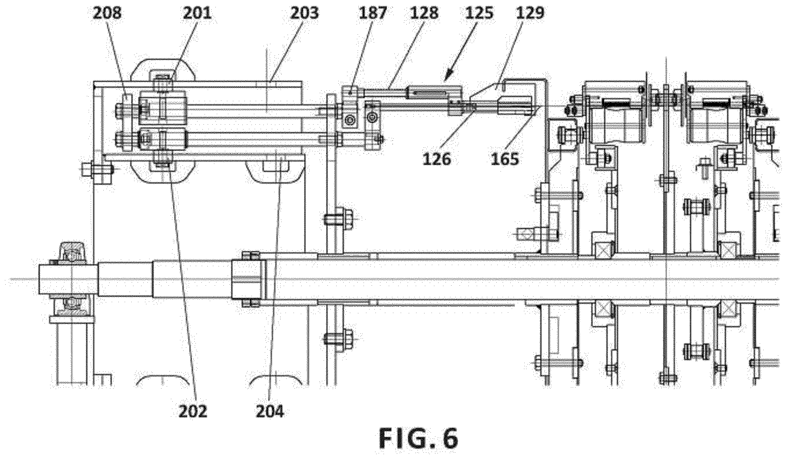

In a second preferred exemplary embodiment shown in Figures 6, 9 and 10, the displacement means and the clamping means are configured to arrange the strawberry in an ideal position to carry out the transversal cutting of the calyx (12), wherein the clamping means comprise two clamping needles (165) and longitudinal cutting means, preferably a blade (129), which allow the cutting of the strawberry (2) in two halves to be carried out through a longitudinal plane thereof, the longitudinal cutting means being centred with respect to the clamping cradle (10) and the clamping needles displaced in relation to the longitudinal plane of the strawberry (2) so that each of the clamping needles (165) holds a half of the strawberry (2) once it has been longitudinally cut. In this way, the subsequent tasks of preparing strawberry jam or compote are facilitated.

The strawberry cutting machine further comprises transversal cutting means that carry out the cutting of the calyx (12) of the strawberry (2) arranged in each movable receiving cradle (10), wherein these transversal cutting means, in a first exemplary embodiment comprise rotating cutting discs (30) that sever the calyx (12) of the strawberry (2) that protrudes from the receiving cradle (10) in the calyx (12) cutting position once said strawberry (2) has been pushed by the movable pushers (25, 125) of the displacement means from the position prior to the calyx (12) cutting position to said calyx (12) cutting position, where said calyx (12) cutting position is defined by stops (27) that limit the advance of the strawberry (2) when it is pushed by the movable pushers (25).

In a second exemplary embodiment, the transversal cutting means that carry out the cutting of the strawberry calyx in a calyx cutting position are fixed transversal cutting means, preferably fixed curved blades facing a zone where the advance means (100) of the set of movable receiving cradles (10) that carry out the advance of the movable receiving cradles (10) return towards the receiving hopper (1) for receiving whole strawberries following a curved trajectory, which facilitates the cut due to the fact that the strawberry rotates while coming into contact with the fixed transversal cutting means.

Once the transversal cutting of the strawberry (2) is completed, and as described above, the folding paddles (21) return to their open position due to the contact of the second sheaves (49) present in the folding paddles (21) with the projections, the fall of the strawberry being carried out without the calyx (12), by means of gravity from the movable receiving cradle (10) towards collecting means to collect the strawberries (2) without the calyx (12) comprising an evacuation hopper (31) of the strawberry without the calyx (12) and a collection drawer (32) of said already cut strawberries. Furthermore, the machine comprises means for collecting the cut calyx (12) comprising an evacuation hopper and a collection drawer (not shown).

The strawberry cutting machine further comprises a fixed chamber (35) facing the first set (50) of movable receiving cradles (10) that obtains the position of each strawberry (2) in each movable receiving cradle (10) upon it passing through the position of said fixed chamber (35), a control system that compares the image obtained of each strawberry (2) with a predetermined image of the optimum position of a strawberry (2) within the receiving cradle (10) and which determines whether the strawberry (2) is well placed, well placed being understood as the strawberry having the longitudinal axis thereof aligned with the rotation axis of the positioning rollers (11), if the strawberry (2) is properly shaped, that is, if it is not deformed or if there is more than one strawberry (2) per receiving cradle (10).

The strawberry cutting machine further comprises ejection means that enable the strawberry (2) or strawberries (2) to be ejected from the receiving cradle (10) in case the control system detects that the strawberry (2) does not have the longitudinal axis thereof aligned with the rotation axis of the positioning rollers (11), if the strawberry (2) is deformed or if there is more than one strawberry (2) per receiving cradle (10). These ejection means comprise a blower (36) that ejects the strawberry(2) or strawberries (2) from the receiving cradle (10) towards an evacuation nozzle (48) when the folding paddles (21) are in their open position.

The strawberry machine further comprises relocation means for relocating the strawberries (2) that act in case the fixed chamber (35) detects that the strawberry (2) does not have the calyx (12) thereof arranged on the side of the receiving cradle (10) adjacent to the transversal cutting means. These relocation means for relocating the strawberries (2) comprise movable pushers (37) that enable the strawberries (2) to be moved out of the movable receiving cradles (10) of the first set (50) and to deposit them on other movable receiving cradles (10) of a second set (60) of cradles arranged in parallel to the first set (50) before the folding paddles (21) of the movable receiving cradles (10) of this second set (50) close down on the strawberry (2). These movable pushers (37) comprise a head (43) and a needle (44) that enables the strawberry (2) to be punctured upon the advance of the movable pusher (37) preventing the transversal displacement thereof. The movement of these relocation means is driven by a set of flat cams.

Preferably, the movable receiving cradles (10) of the second set (60) have a configuration symmetrical to the movable receiving cradles (10) of the first set (50) with respect to a vertical plane arranged between both sets (50, 60), but are offset with respect to the movable receiving cradles (10) of the first set (50) to compensate for the time it takes the strawberry (2) to pass from a movable receiving cradle (10) of the first set (50) to a movable receiving cradle (10) of the second set (50).

Between both sets of cradles (50, 60) the strawberry cutting machine comprises intermediate support means (42) where the strawberry (2) rests during the passage thereof from the first set (50) to the second set (60) during the push carried out by the movable pusher (37) of the relocation means.

The machine further comprises displacement means that make it possible to move the strawberries within the movable receiving cradles (10) of the second set (60) from the position prior to the calyx (12) cutting position to the calyx (12) cutting position, displacement means equal to those described for the first set (50) of movable cradles (10), stops for this second set (60) which are the same as those described for the first set (50), transversal cutting means for the second set (60) which are the same as those described for the first set and clamping means which are the same as those described for the first set (50) of movable cradles (10).

## Claims

1. A strawberry cutting machine comprising:
• transversal cutting means that carry out the cutting of the calyx (12) of the strawberry (2) in a calyx (12) cutting position,
• a first set (50) of receiving cradles (10),
• advance means (100) of the first set (50) of receiving cradles (10) that carry out the advance of the receiving cradles (10),
wherein each receiving cradle (10) is configured to receive a strawberry (2) and comprises:
∘ two positioning rollers (11), wherein at least one of the two positioning rollers (11) is rotatable around its axis to position the strawberry (2) in a position prior to the calyx (12) cutting position or in a calyx (12) cutting position, and
∘ at least one folding paddle (21) that fixes the position of the strawberry (2) within the receiving cradle (10) into the position prior to the calyx (12) cutting position or in the calyx cutting position,
• displacement means that make it possible to move the strawberries (2) within the movable receiving cradles (10) from the position prior to the calyx (12) cutting position to the calyx (12) cutting position; and
• clamping means configured to hold the strawberry (2) in at least the calyx (12) cutting position,
**characterised in that** the displacement means and the clamping means are independently movable.

2. The strawberry cutting machine according to claim 1 **characterised in that** the clamping means are configured to hold at least one portion of a strawberry (2) both in the position prior to the calyx (12) cutting position and in the calyx (12) cutting position.

3. The strawberry cutting machine according to any of the preceding claims **characterised in that** the displacement means and the clamping means are independently movable essentially in the same direction of movement.

4. The strawberry cutting machine according to claim 3 **characterised in that** the displacement means and the clamping means are independently movable essentially in the same direction of movement and are offset.

5. The strawberry cutting machine according to any of the preceding claims **characterised in that** it further comprises at least one first follower (201) attached to the displacement means and at least one second follower (202) attached to the clamping means, wherein the at least one first follower (201) follows the trajectory defined by at least one first cam (203) and the at least one second follower (202) follows the trajectory defined by at least one second cam (204).

6. The strawberry cutting machine according to any of the preceding claims, **characterised in that** it further comprises movable drive means (101) that are configured to come into contact with the positioning rollers (11) such that the rotation speed of the positioning rollers (11 ) is independent from the speed of the advance means (100) of the first set (50) of receiving cradles (10).

7. The strawberry cutting machine according to claim 6 **characterised in that** it further comprises speed adjusting means for adjusting the speed of the movable drive means (101), which vary the speed of said movable drive means (101) and consequently the rotation speed of the positioning rollers (11) for the size of strawberry (2) to be cut.

8. The strawberry cutting machine according to any of claims 6 or 7 **characterised in that** the movable drive means (101) comprise:
∘ movable drive belts (102) that come into contact with the positioning rollers (11), where the movable drive belts (102) are arranged between two pulleys, a first drive pulley (103) that actuates and guides the drive belts (102) and a second redirection pulley (104) that guides the drive belts (102), and
∘ concave sheaves (105) which house and press the movable drive belts (102) against the positioning rollers (11) assuring contact between the movable drive belts (102) and the positioning rollers (11).

9. The strawberry cutting machine according to claims 7 and 8 **characterised in that** the speed adjusting means comprise a rocker (106) attached to the concave sheave (105) and further attached to a spring (107) which in turn is attached to the machine frame, so that by adjusting the tension in the spring (107), the rotation of the rocker (106) on the concave sheave (105) varies, and consequently the pressure of the concave sheave (105) on the movable drive belts (102) which come into contact with the positioning rollers (11).

10. The strawberry cutting machine according to any of the preceding claims **characterised in that** the positioning rollers (11) comprise a generatrix (15) comprising at least one concave zone (17).

11. The strawberry cutting machine according to any of the preceding claims **characterised in that** the folding paddles (21) comprise first sheaves (22) defining:
• an open position of said folding paddles (21) due to the contact of the first sheaves (22) with a guiding surface (45), and springs (23) that carry out the elastic attachment between the folding paddles (21) and the receiving cradles (10), and
• a closed position of said folding paddles (21) defined by the contact of the folding paddles (21) with the strawberry (2) due to the spring recovery force (23) when the first sheaves (22) of the folding paddles (21) cease being in contact with the guiding surface (45).

12. The strawberry cutting machine according to any of the preceding claims **characterised in that** the displacement means comprise pushers (25, 125) which are movable in the longitudinal direction of the strawberry (2)

13. The strawberry cutting machine according to claim 12 **characterised in that** the displacement means further comprise a movable head (26, 126) that pushes the strawberry (2) within the movable receiving cradle (10) and is elastically attached to the pusher (25, 125) which are movable by means of a spring (28, 128) to adapt the movable head (26, 126) to the strawberry (2) size.

14. The strawberry cutting machine according to any of the preceding claims **characterised in that** the clamping means comprise at least one clamping needle (65, 165).

15. The strawberry cutting machine according to any of the preceding claims, **characterised in that** the clamping means further comprise longitudinal cutting means that enable cutting the strawberry into two halves through a longitudinal plane thereof.

16. The strawberry cutting machine according to any of the preceding claims **characterised in that** the cradles of the first set (50) of receiving cradles (10) are movable and the machine further comprises a fixed chamber (35) facing the first set (50) of movable receiving cradles (10) that obtains the position of each strawberry (2) in each movable receiving cradle (10) upon it passing through the position of said fixed chamber (35), and a control system that compares the image obtained of each strawberry (2) with a predetermined image of the optimal position of a strawberry (2) within the receiving cradle (10).

17. The strawberry cutting machine according to claim 16 **characterised in that** it comprises ejection means (36) that enable the strawberry (2) or strawberries (2) to be ejected from the receiving cradle (10) in case the control system detects that the strawberry (2) does not have the longitudinal axis thereof aligned with the rotation axis of the positioning rollers (11), if the strawberry (2) is deformed or if there is more than one strawberry (2) per receiving cradle (10).

18. The strawberry cutting machine according to claim 16 **characterised in that** it comprises means for relocating the strawberries (2) comprising movable pushers (37) that enable the strawberries (2) to be moved out of the movable receiving cradles (10) of the first set (50) and deposit them in other movable receiving cradles (10) of a second set (60) of cradles arranged in parallel to the first set (50).

19. The strawberry cutting machine according to claim 18 **characterised in that** the movable pushers (37) comprise a head (43) and a needle (44) which enables the strawberry (2) to be punctured upon the advance of the movable pusher (37).

20. The strawberry cutting machine according to claim 19 **characterised in that** the movable receiving cradles (10) of the second set (60) have a symmetrical configuration to the movable receiving cradles (10) of the first set (50) with respect to a vertical plane arranged between both sets (50, 60).

21. The strawberry cutting machine according to claim 20 **characterised in that** the movable receiving cradles (10) of the second set (60) are offset with respect to the movable receiving cradles (10) of the first set (50).

22. The strawberry cutting machine according to claim 20 **characterised in that** each receiving hopper (1) is rotatable and comprises:
• a dosing tray (3) comprising cavities (4) wherein each of the strawberries (2) are housed, and
• transfer means (5) that enable each of the strawberries (2) to be moved from the cavity (4) of the dosing tray (3) to one of the receiving cradles (10) through an opening (14) present in the receiving hopper (1), wherein these transfer means (5) are adjacent to the opening present in the receiving hopper (1),
wherein the dosing tray (3) further comprises circumferential grooves (20) that prevent the interference of said dosing plate (3), which is integrated with the receiving hopper (1), with the transfer means (5) which are fixed.

23. The strawberry cutting machine according to claim 20 **characterised in that** each receiving hopper (1) further comprises blocking means (8) that remove the strawberries (2) from above the cavity (4) of the dosing tray (3) which is facing the transfer means (5).

24. The strawberry cutting machine according to any of the preceding claims **characterised in that** the transversal cutting means that carry out the cutting of the calyx (12) of the strawberry (2) in a calyx (12) cutting position are fixed transversal cutting means (120), preferably fixed curved blades facing an area where the advance means (100) of the movable receiving cradles (10) which carry out the advance of the movable receiving cradles (10) return towards the receiving hopper (1) of whole strawberries following a curved trajectory.
